(19) Europäisches Patentamt / European Patent Office / Office européen des brevets

(11) **EP 1 536 246 B1**

(12) **FASCICULE DE BREVET EUROPEEN**

(45) Date de publication et mention
de la délivrance du brevet:
**31.10.2018 Bulletin 2018/44**

(51) Int Cl.:
**G01S 13/87** (2006.01)  **G01S 17/87** (2006.01)
**F41H 11/02** (2006.01)  **G01S 13/00** (2006.01)

(21) Numéro de dépôt: **04292726.9**

(22) Date de dépôt: **18.11.2004**

(54) **Procédé de détection de l'éntrée d'une cible dans une zone, dispositif de détection et dispositif de protection mettant en oeuvre ce procédé**

Verfahren zur Detektion des Eintritts eines Zieles in einer Zone, Detektionsgerät und Schutzgerät zur Durchführung des Verfahrens

Method for the detection of the entry of a target into a zone, detection device and protection device using the method

(84) Etats contractants désignés:
**AT BE BG CH CY CZ DE DK EE ES FI FR GB GR HU IE IS IT LI LU MC NL PL PT RO SE SI SK TR**

(30) Priorité: **27.11.2003 FR 0314101**
**27.11.2003 FR 0314099**

(43) Date de publication de la demande:
**01.06.2005 Bulletin 2005/22**

(60) Demande divisionnaire:
**07075509.5 / 1 852 712**

(73) Titulaire: **NEXTER Munitions**
**78000 Versailles (FR)**

(72) Inventeur: **Bredy, Thierry**
**18230 Saint Doulchard (FR)**

(74) Mandataire: **Célanie, Christian**
**Cabinet Célanie**
**5 Avenue de Saint Cloud**
**B.P. 214**
**78002 Versailles Cedex (FR)**

(56) Documents cités:
**EP-A- 0 199 447      WO-A-98/43111**
**DE-A- 4 008 395      FR-A- 2 786 262**
**GB-A- 2 378 597      US-A- 4 896 606**
**US-B1- 6 433 856**

## Description

Le domaine technique de l'invention est celui des dispositifs permettant de détecter l'entrée d'une cible dans une zone.

De tels dispositifs sont mis en oeuvre notamment pour déclencher un dispositif assurant la protection d'un véhicule terrestre ou naval.

On connaît notamment par les brevets FR-2722873 et WO01/88564 un dispositif de défense pour véhicule blindé qui met en oeuvre un radar de poursuite de cible commandant le positionnement d'une tourelle permettant le tir de projectiles de défense.

Ce dispositif permet la destruction de la cible lorsque cette dernière se situe à une distance appropriée.

On connaît également par les brevets EP-0687885 et DE4008395 un autre dispositif de défense dans lequel un radar permet de déterminer la trajectoire d'une cible. Ce radar est couplé à un dispositif de défense comprenant plusieurs munitions réparties autour de la tourelle du char. Une conduite de tir détermine alors quelle sont les munitions les plus appropriées pour détruire la cible et il provoque leur tir au moment opportun.

Les dispositifs connus sont complexes, fragiles et coûteux. Leur intégration sur un véhicule de combat est donc délicate. Elle impose par ailleurs la mise en place de connexions spécifiques entre le dispositif de détection, une unité de commande et le ou les moyens de défense.

Ces dispositifs mettent en oeuvre un procédé de détection dans lequel un moyen unique (par exemple radar) assure l'émission d'un signal d'illumination vers une cible puis le traitement du signal réfléchi. Ce procédé comprend alors une phase de traitement de données permettant de calculer la trajectoire de la cible et de déterminer les ordres de commande destinés au dispositif de défense.

Ce procédé est lourd du point de vue calcul puisqu'il implique une détermination précise de la trajectoire réelle de la cible. Il impose par ailleurs la mise en place de moyens d'interconnexion ou de liaison radio entre le calculateur et le dispositif de défense avec les protocoles de communication appropriés.

C'est le but de l'invention que de proposer un dispositif permettant de pallier de tels inconvénients.

Ainsi le dispositif selon l'invention permet de façon simple et rapide d'assurer la détection de l'entrée d'une cible dans une zone et sans qu'il soit nécessaire de déterminer de façon précise la trajectoire réelle d'approche de la cible.

L'invention a donc pour objet un dispositif de détection de l'entrée d'une cible dans une zone selon revendication 1.

Selon une caractéristique de l'invention, la source est disposée à distance des détecteurs passifs, un détecteur arrière recevant directement le faisceau émis par la source.

Selon une autre caractéristique de l'invention, la ou les sources émettent un faisceau radar ou laser pulsé.

L'invention concerne également un dispositif de protection associant au moins un dispositif de détection selon l'invention et au moins un module de contrôle ou de défense dont le déclenchement est commandé par le signal de détection de cible après que cette dernière a pénétré dans une zone d'efficacité du module de contrôle ou de défense, le dispositif de détection associé au module de contrôle ou de défense comprennent donc deux détecteurs passifs et une source qui est distincte de ces détecteurs, source reliée aux détecteurs par au moins une liaison de synchronisation.

Selon une caractéristique de l'invention, le module de contrôle ou de défense comprend un moyen de protection active susceptible de projeter au devant de la cible au moins un moyen d'interception.

Selon une autre caractéristique de l'invention, le moyen d'interception comprend : au moins une plaque de blindage et/ou au moins un jet ou noyau de charge formée et/ou au moins un barreau et/ou au moins un projectile explosif et/ou au moins un projectile à effet de souffle.

Selon encore une autre caractéristique de l'invention, le moyen d'interception comprend au moins un barreau projetable par explosif.

Selon une autre caractéristique de l'invention, le dispositif de détection associé au module de contrôle ou de défense comprend deux détecteurs passifs avant et un détecteur passif arrière recevant directement le faisceau émis par une source distante.

Selon une autre caractéristique de l'invention, le dispositif de protection associe une source émettrice et au moins deux modules de contrôle ou de défense, chaque module comportant ses propres détecteurs avant et arrière.

Chaque détecteur pourra comporter un champ de détection permettant de discriminer spatialement au moins un bord de la zone observée.

Chaque détecteur pourra ainsi être disposé sensiblement au niveau d'une des extrémités du barreau.

L'invention sera mieux comprise à la lecture de la description qui va suivre de différents modes de réalisation, description faite en référence aux dessins annexés et dans lesquels :

- la figure 1 est une vue de dessus schématique d'un premier mode de réalisation d'un dispositif mettant en oeuvre un procédé,
- la figure 2 est un logigramme schématisant les étapes du procédé,
- la figure 3 est une vue latérale schématique d'un deuxième mode de réalisation d'un dispositif,
- les figures 4a et 4b sont deux vues schématiques d'un dispositif de protection, la figure 4a étant une vue de dessus du dispositif (vue suivant la flèche B représentée à la figure 4b) et la figure 4b étant une vue frontale du dispositif (vue suivant la flèche A représentée à la figure 4a),

- les figures 5 et 6 sont des représentations en vue frontale schématique de la mise en oeuvre d'autres modes de réalisation d'un dispositif de protection,
- la figure 7 est un logigramme schématisant les étapes d'une variante du procédé selon l'invention,
- la figure 8 est une représentation en vue frontale schématique de la mise en oeuvre d'un autre mode de réalisation d'un dispositif de protection,
- la figure 9 est un logigramme schématisant les étapes d'une variante du procédé selon l'invention,
- la figure 10 est une représentation en vue frontale schématique de la mise en oeuvre d'un mode de réalisation d'un dispositif de protection selon invention,
- la figure 11 est une vue latérale schématique d'un mode de réalisation d'un dispositif selon l'invention,
- la figure 12 est une représentation en vue frontale schématique de la mise en oeuvre du mode de réalisation selon la figure 11,
- les figures 13a,13b et 13c sont des schémas blocs représentant des exemples de réalisation d'un moyen de calcul mis en oeuvre par le dispositif selon le mode de réalisation des figures 11 et 12,
- les figures 14 et 15 sont des représentations schématiques d'autres modes de réalisation d'un dispositif de protection selon invention.

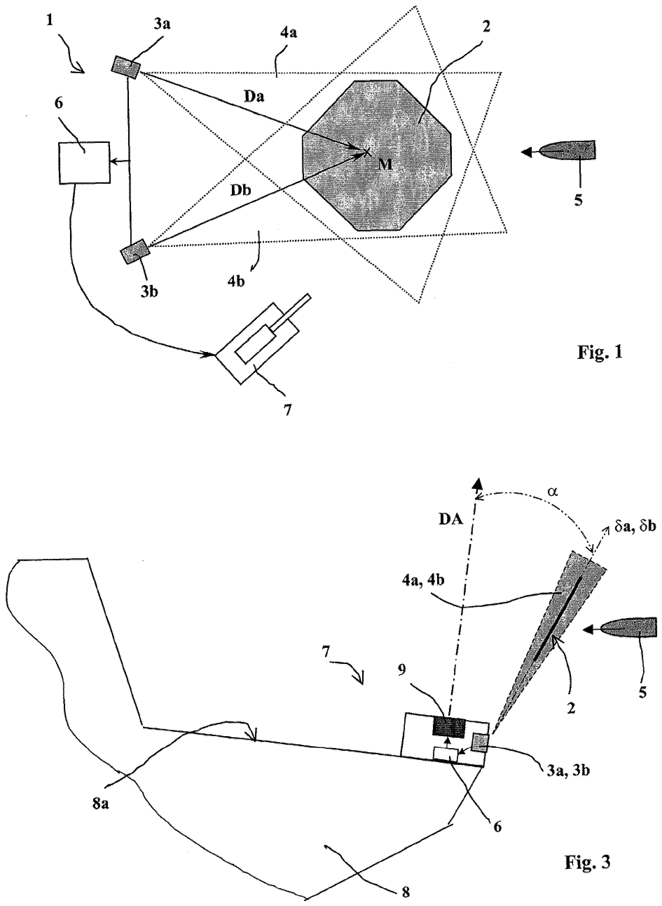

En se reportant à la figure 1, un dispositif de détection 1 assure la surveillance d'une zone 2 de terrain. Ce dispositif comprend ici deux détecteurs 3a et 3b disposés à proximité de la zone 2. Ces détecteurs sont des détecteurs actifs de technologie optique laser. Chaque détecteur émet ainsi en direction de la zone 2 un faisceau d'illumination 4a, 4b. Chaque détecteur comporte également des moyens de réception du rayonnement qui serait réfléchi par une cible 5 approchant de la zone. Ici la cible 5 représentée est un projectile, tel un missile ou une roquette, qui se dirige vers la zone 2. La fréquence des impulsions laser est de l'ordre de quelques kilohertz.

On pourrait également mettre en oeuvre des détecteurs radars dans la gamme millimétrique.

Les détecteurs 3a et 3b ont des champs de détection qui sont sensiblement confondus avec leurs faisceaux d'illumination 4a, 4b et ils comportent une partie commune couvrant entièrement la zone 2. Ainsi toute cible située dans la zone 2 (par exemple en un point M) reçoit les faisceaux d'illumination 4a et 4b et elle peut être localisée d'une façon simple par la mesure des distances Da et Db qui la séparent de chaque détecteur 3a, 3b.

On notera que, si la localisation dans un plan horizontal est correcte, il subsiste une indétermination au niveau de la localisation de la cible suivant une direction perpendiculaire à ce plan. Cette incertitude dépend de la largeur des faisceaux d'illumination 4a,4b le long de cette troisième direction de l'espace. Concrètement cette incertitude peut être négligée avec une ouverture des faisceaux d'illumination de +/-15° par rapport au plan horizontal.

Les détecteurs 3a et 3b sont reliés à un moyen de calcul 6 qui peut calculer les distances entre chaque détecteur 3a et 3b et la cible 5 lorsque cette dernière entre dans le champ commun aux deux détecteurs. Le moyen de calcul est constitué par exemple par un microprocesseur comportant une programmation appropriée permettant l'exécution du procédé selon l'invention. Ce microprocesseur assurera le pilotage des détecteurs 3a,3b et l'exploitation des signaux fournis par ces derniers.

Dans ce mode particulier de réalisation, chaque détecteur est aussi un émetteur. Il constitue donc lui-même une source d'illumination laser et il y a une synchronisation entre les signaux émis et les signaux reçus après réflexion sur la cible. Il est donc possible de déterminer les distances par une simple mesure du temps séparant une émission de la réception du signal réfléchi par la cible 5. Le moyen de calcul 6 détermine ainsi facilement la distance de parcours total du rayonnement entre une source et un détecteur via la cible. La distance détecteur / cible est égale à la moitié de cette distance de parcours.

Grâce au moyen de calcul 6, chaque détecteur est synchronisé à lui-même et il attend le rayonnement réfléchi par la cible dans un intervalle de temps de l'ordre de quelques dizaines de nanosecondes après l'émission (fenêtre d'observation).

Par ailleurs, afin d'éviter une interférence entre les signaux fournis par chaque détecteur et donc des erreurs de mesure, on prévoira un décalage temporel entre les émissions de l'un et de l'autre des détecteurs actifs 3a, 3b. Ce décalage sera mis en mémoire dans le moyen de calcul 6 qui pilotera les émissions de chaque détecteur. Les fenêtres d'observation de chaque voie de mesure devront donc ne pas avoir de partie commune.

Un décalage de l'ordre de quelques dizaines de nanosecondes entre les émissions de chaque source 3a, 3b est suffisant pour une distance moyenne entre un émetteur 3 et la zone 2 de l'ordre de 20 m. Ce décalage doit être supérieur à la fenêtre d'observation pour assurer la discrimination des signaux provenant de l'une ou de l'autre source.

Enfin le moyen de calcul 6 incorpore en mémoire une fenêtre temporelle préétablie à l'intérieur de la quelle devront se trouver les deux mesures de distance pour pouvoir être validées. Une telle disposition permet de rejeter les fausses alarmes.

Par ailleurs, pour protéger le dispositif contre des contre mesures éventuelles, on pourra prévoir un codage des faisceaux lasers et disposer dans le moyen de calcul 6 un circuit de décodage.

Après mesure des distances Da et Db, l'unité de calcul 6 vérifie si la cible 5 ainsi détectée se trouve effectivement à l'intérieur de la zone 2. Cette vérification est effectuée aisément par un algorithme approprié à partir d'une définition géométrique de la zone 2 qui aura été mise en mémoire au préalable à l'intérieur du moyen de calcul 6.

Si la cible 5 se trouve effectivement à l'intérieur de la zone 2, le moyen de calcul active un module de contrôle ou de défense 7, ici un système d'arme monté sur véhicule, système dont la zone d'efficacité inclut la zone 2.

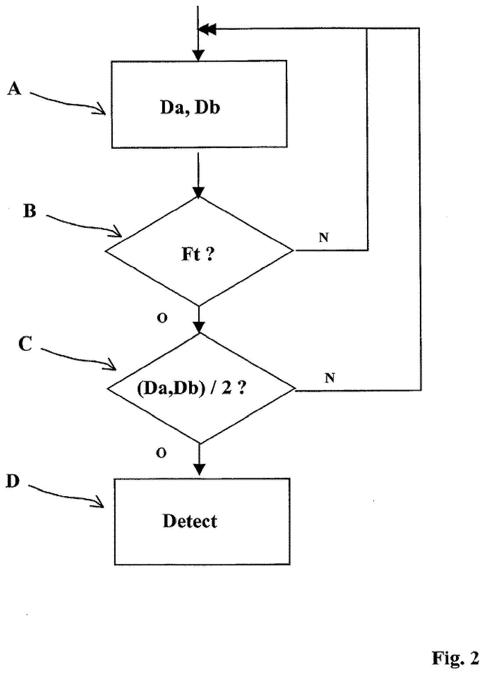

Le procédé mis en oeuvre par ce mode de réalisation est schématisé par la figure 2.

Au cours d'une première étape (bloc A) on mesure les distances Da et Db entre chaque détecteur/source 3a, 3b et la cible 5. On vérifie que ces deux mesures interviennent à l'intérieur de la fenêtre temporelle Ft prédéfinie (test B), cela afin de rejeter les fausses alarmes. Une mesure qui ne serait présente que sur une seule voie est donc rejetée. On compare ensuite les valeurs mesurées avec la définition géométrique de la zone 2 (test C : Da,Db/(2)).

On fournit un signal de détection de cible (bloc D) lorsque le point M mesuré et correspondant à la localisation de la cible 5 se situe géométriquement à l'intérieur de la zone 2 qui est surveillée.

Les dispositifs selon l'état de la technique nécessitent plusieurs mesures successives par un seul détecteur de la distance entre celui ci et une cible afin de connaître sa trajectoire et en déduire sa localisation dans une zone donnée.

Le dispositif et le procédé proposés permettent de simplifier la détection puisque la conjonction de deux mesures de distance permet de fournir instantanément une information de localisation ou non à l'intérieur d'une zone.

Le dispositif et le procédé proposés seront encore plus efficaces et sélectifs si la zone 2 est de dimensions réduites et que les faisceaux d'illumination 4a, 4b permettent d'approcher sa géométrie.

Le dispositif proposé est ainsi particulièrement bien adapté aux dispositifs de protection active par exemple d'un véhicule ou d'une structure fixe.

La figure 3 représente ainsi un mode de réalisation d'un dispositif de protection comprenant un module de défense active 7 qui est solidaire du glacis 8a d'un véhicule blindé 8.

Ce module comporte un moyen d'interception projetable 9 qui pourra être constitué par une ou plusieurs plaques de blindage pouvant être projetées comme suite à l'initiation d'une feuille d'explosif par un détonateur (ces blindages sont décrits par exemple par les brevets DE2719150 ou FR2679022) .

Le moyen d'interception projetable 9 pourra alternativement comprendre une ou plusieurs charges formées (charge creuses ou charges génératrices de noyau) disposées suivant une ligne ou bien suivant un quadrilatère. Les brevets FR2786262, GB1421379 et US3893368 décrivent de tels modules actifs mettant en oeuvre des charges formées.

D'une façon préférée (et qui est celle représentée aux figures), le moyen d'interception projetable 9 pourra comprendre un ou plusieurs barreaux projetés par l'initiation d'un explosif. Le brevet FR2805037 décrit une telle charge à projection de barreaux qui est particulièrement efficace pour contrer les projectiles cinétiques ou projectiles flèches.

La projection des barreaux ou des plaques se fait suivant une direction d'action DA qui est sensiblement perpendiculaire au glacis 8a du véhicule.

Conformément à l'invention le module de défense active 7 comporte deux détecteurs 3a, 3b reliés à un moyen de calcul 6 qui commande la projection du moyen d'interception 9 à l'issue d'un retard après détection cela afin de permettre à la cible 5 de se positionner au-dessus du module 7.

Comme dans le mode de réalisation précédent, les détecteurs 3a, 3b sont ici des détecteurs actifs qui émettent chacun un faisceau d'illumination laser 4a, 4b en direction d'une zone 2 et qui comportent des moyens de réception du rayonnement qui serait réfléchi par une cible 5 approchant de la zone.

Afin d'assurer d'une façon efficace la détection de la cible 5, les détecteurs 3a, 3b auront une direction d'illumination et d'observation $\delta a$, $\delta b$ qui formera un angle $\alpha$ avec la direction d'attaque DA, angle qui sera inférieur à 90°.

Lorsque la cible 5 se trouve dans la zone 2 défendue (qui peut être ici considérée comme un quadrilatère disposé dans un plan formé par les directions $\delta a$ et $\delta b$), le moyen de calcul 6 commande (à l'issue du retard nécessaire à la cible pour se placer au-dessus du module) la projection du moyen d'interception 9 suivant la direction DA, ce qui provoque la destruction ou la déstabilisation de la cible 5.

L'avantage de ce dispositif de protection est que chaque module de défense 7 est totalement autonome pour ce qui concerne la détermination de son instant de déclenchement.

Les modules de défense sont donc peu coûteux et peu fragiles. Ils ne nécessitent qu'une connexion au réseau électrique voire aucune si le module a sa propre alimentation. L'invention permet donc d'améliorer de façon simple et économique la protection de véhicules existants.

A titre d'exemple numérique, pour un module de défense projetant un barreau d'acier de 0,4 m de long à une vitesse de l'ordre de 500 m/s, il est possible de détecter en moins d'une milliseconde et à 2 m du module 7 une cible 5 passant suivant une trajectoire située à 1,5 m au-dessus du module. L'angle $\alpha$ formé par la direction d'observation $\delta$ avec la direction d'attaque sera de l'ordre de 30° et la fréquence de répétition des sources lasers sera de l'ordre de 3 kHz.

Ces performances permettent la destruction de la cible 5.

L'ajustement de l'angle $\alpha$ permet en partie de s'adapter à différentes gammes de vitesses de cibles. Plus la cible visée sera rapide, plus l'angle $\alpha$ devra être important pour assurer une détection plus précoce de la cible et donner un délai suffisant pour la projection du moyen d'interception.

L'angle α pourra être fixé dès la conception du module de défense. Dans ce cas le module aura une efficacité optimale contre les cibles ayant une certaine vitesse.

On pourra également définir un module de défense dans lequel l'angle α sera modifiable (par une inclinaison du récepteur ou bien par une collimation optique appropriée).

Dans ce cas on prévoira au niveau du véhicule des moyens (par exemple radar) permettant de mesurer la vitesse d'approche du projectile et on télécommandera à partir du véhicule la modification de l'angle α pour lui donner l'inclinaison la plus appropriée au type de cible détecté.

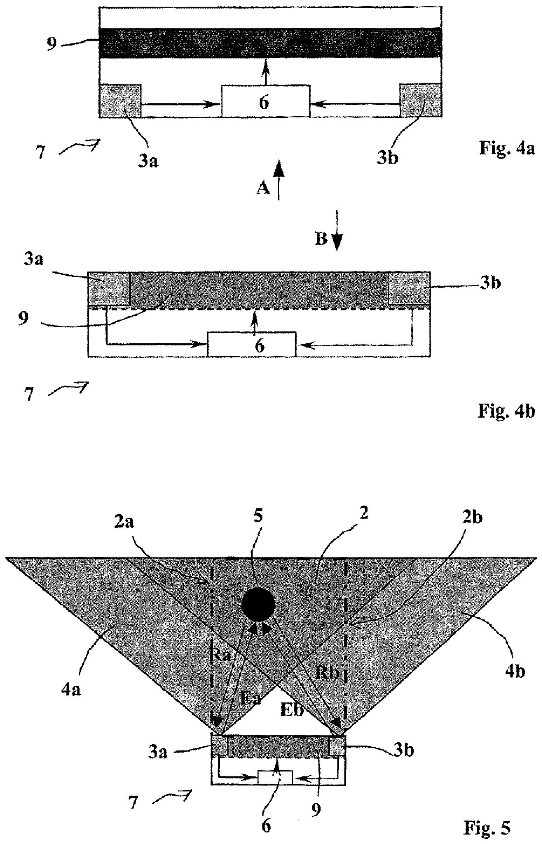

Les figures 4a et 4b montrent suivant deux autres vues différentes ce mode de réalisation d'un module de défense active 7.

Le module 7 présente la forme d'un parallélépipède rectangle. Il comporte un moyen d'interception 9 qui comprend un barreau projetable par explosif, barreau qui est disposé suivant une des longueurs du module 7 (voir le brevet FR2805037).

Le barreau 9 est vu de dessus sur la figure 4a. Il est caché sur la figure 4b (et donc représenté en grisé clair) et il se trouve en arrière des détecteurs 3a et 3b. Chaque détecteur 3a, 3b se trouve disposé sensiblement au niveau d'une des extrémités du barreau 9 pour des raisons qui seront explicitées par la suite.

Le module électronique 6 est relié aux détecteurs 3a, 3b et il commande l'initiation du moyen d'interception 9 par un dispositif d'initiation classique (tel une amorce détonateur) non représenté.

La figure 5 montre ce module de défense active 7 suivant une vue analogue à la figure 4b. Cette figure permet de visualiser la forme (en projection) des champs de détection 4a et 4b pour ce mode particulier de réalisation.

Ce mode de réalisation est analogue à celui décrit en référence à la figure 1. Les détecteurs 3a et 3b sont des détecteurs actifs. Chaque détecteur émet un faisceau d'illumination suivant les champs 4a et 4b. Une partie des rayonnements émis (flèches Ea et Eb) est réfléchie sur la cible 5 (flèches Ra et Rb) et elle est reçue par le détecteur 3a ou 3b. Le logigramme de fonctionnement est celui de la figure 2. Chaque distances Da, Db est égale à la moitié de la distance de parcours du rayonnement entre le détecteur/source (3a,3b) considéré et lui-même via la cible 5. Le module de calcul 6 évalue donc les distances Da et Db et vérifie que ces mesures de distances interviennent dans une fenêtre temporelle Ft prédéfinie à l'intérieur de laquelle doivent être effectuées les deux mesures de distance.

La projection de la zone 2 dans un plan vertical confondu avec le plan de la direction d'action DA du barreau 9 est représentée en pointillés sur la figure 5. Elle ne correspond pas à toute la partie commune des faisceaux 4a et 4b. En effet pour que le moyen d'interception 9 soit efficace contre la cible 5, il est nécessaire qu'il ne soit déclenché que si la trajectoire de la cible passe entre les plans verticaux 2a, 2b passant par les extrémités du barreau 9. Cette définition géométrique de la zone 2 est mise en mémoire dans le moyen de calcul qui déterminera alors (test C) si la cible 5 se trouve effectivement dans la zone protégée.

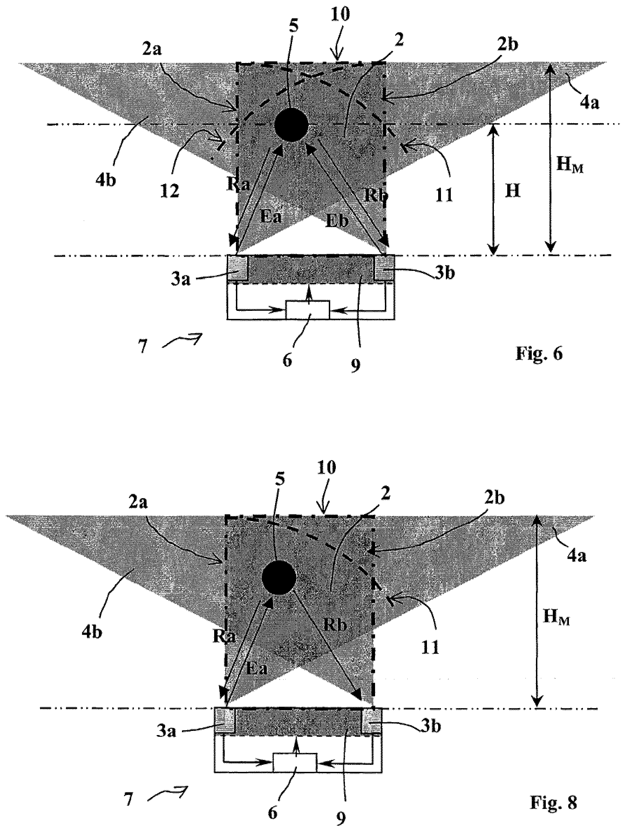

La figure 6 schématise un autre mode de réalisation d'un dispositif. Ce mode diffère du précédent en ce que chaque détecteur actif 3a, 3b est discriminant spatialement. Chaque détecteur comporte ainsi un champ de détection 4a et 4b qui délimite spatialement un bord 2a ou 2b de la zone 2 observée.

Une telle discrimination spatiale peut être aisément obtenue par la mise en oeuvre d'une optique appropriée sur chaque détecteur ou bien par le simple pivotement de chaque détecteur de façon à positionner verticalement une des limites de son champ d'observation 4a ou 4b.

Du fait du positionnement de chaque détecteur 3a, 3b sensiblement au niveau d'une extrémité du barreau 9, les limites verticales des champs d'observation définissent donc (en projection dans le plan vertical confondu avec le plan de la direction d'action DA du barreau) les limites 2a et 2b de la zone d'efficacité du barreau 9.

Un tel mode de réalisation permet de simplifier le moyen de calcul puisqu'il n'est plus alors nécessaire d'introduire dans celui ci une définition géométrique précise de la zone 2.

On pourra en effet uniquement vérifier que la cible 5 passe à une hauteur H par rapport au module de défense 7 qui soit compatible avec l'efficacité de ce dernier.

Cette hauteur H doit être inférieure à une hauteur $H_M$ (limite 10 de la zone 2). Il suffira donc de vérifier que Da d'une part et Db d'autre part sont inférieures ou égales à $H_M$. Les arcs de cercle 11 et 12 correspondent à ces deux conditions, respectivement $Da \leq H_M$ et $Db \leq H_M$.

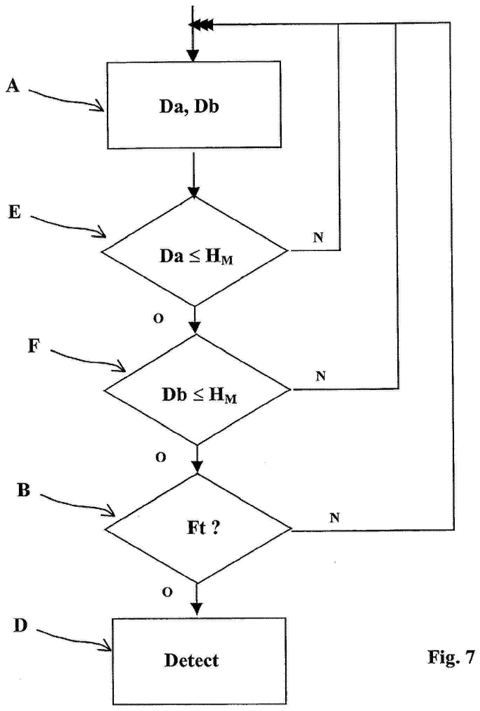

On met en oeuvre alors une variante du procédé qui est schématisée par la figure 7.

Après la mesure de Da et de Db (bloc A) on conduit les deux tests E et F (successivement ou parallèlement) permettant de vérifier que les distances mesurées Da et Db sont bien inférieures ou égales à la hauteur maximale acceptée $H_M$.

On vérifie également comme dans le mode de réalisation précédent (test B) que les mesures interviennent dans une fenêtre temporelle Ft prédéfinie à l'intérieur de laquelle doivent être effectuées les deux mesures de distance. Cela afin de rejeter les fausses alarmes.

Si toutes les conditions sont remplies, on fournit un signal de détection de cible (bloc D). Ce signal est utilisé par le module de calcul 6 pour commander la projection du barreau 9 (à l'issue bien entendu d'un retard nécessaire à la cible 5 pour se placer au-dessus du module 7).

La figure 8 schématise un autre mode de réalisation d'un dispositif. Ce mode diffère du précédent en ce que seul le détecteur 3a est un détecteur actif assurant une émission suivant un champ d'illumination 4a. Le détecteur 3b est passif (réalisé suivant la même technologie que le capteur incorporé dans le détecteur actif), il présente un champ d'observation 4b.

Comme dans le mode de réalisation précédent les champs 4a et 4b sont discriminants spatialement et délimitent donc spatialement un des bords 2a ou 2b de la zone 2 observée.

Une partie des rayonnements émis par le détecteur 3a (flèche Ea) est réfléchie sur la cible 5 et elle est reçue à la fois par le détecteur actif 3a (flèche Ra) et par le détecteur passif 3b (flèche Rb).

Le détecteur actif 3a est ainsi indirectement relié au détecteur passif 3b par l'intermédiaire de l'unité de calcul 6 qui assure la synchronisation des signaux reçus du détecteur passif 3b avec l'émission du détecteur actif 3a.

On est assuré ainsi d'éviter les fausses alarmes. Concrètement il suffit pour accepter un signal Rb qu'il arrive sur le détecteur passif 3b dans une fenêtre temporelle donnée Ft après l'émission du signal Ea par le détecteur actif 3a.

Le procédé mis en oeuvre se trouve alors simplifié, puisqu'une seule mesure de distance (Da) est alors nécessaire.

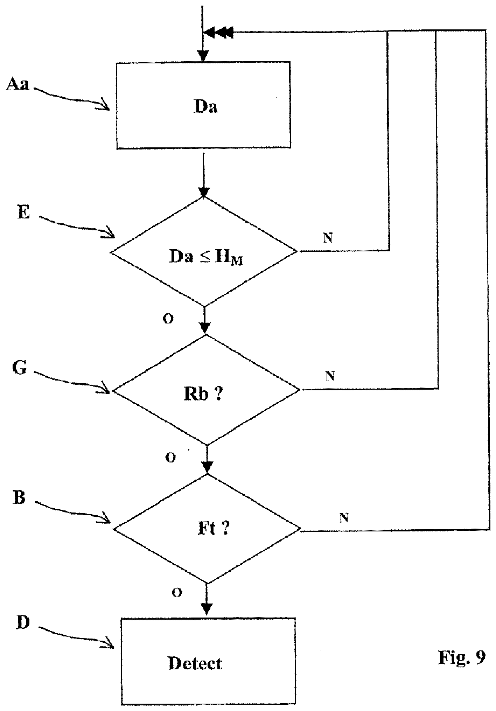

La figure 9 schématise cette variante du procédé.

Le bloc Aa correspond à la mesure unique de la distance Da du détecteur actif 3a à la cible 5. Le test E vérifie que cette distance Da est inférieure ou égale à la valeur maximale acceptée $H_M$ (arc de cercle 11).

Le test G est un critère de vérification de la réception par le détecteur passif 3b d'un signal réfléchi par la cible 5 (critère de présence sans calcul de distance). Le test B étant la vérification que cette réception intervient bien dans une fenêtre temporelle Ft donnée après l'émission du signal par le détecteur actif.

Si toutes les conditions sont remplies, on fournit un signal de détection de cible (bloc D), signal utilisé par le module de calcul 6 pour commander la projection du barreau 9.

Ce mode de réalisation permet également de réduire le coût du dispositif (les détecteurs passifs sont moins coûteux que les détecteurs actifs) ainsi que de diminuer la consommation en énergie électrique.

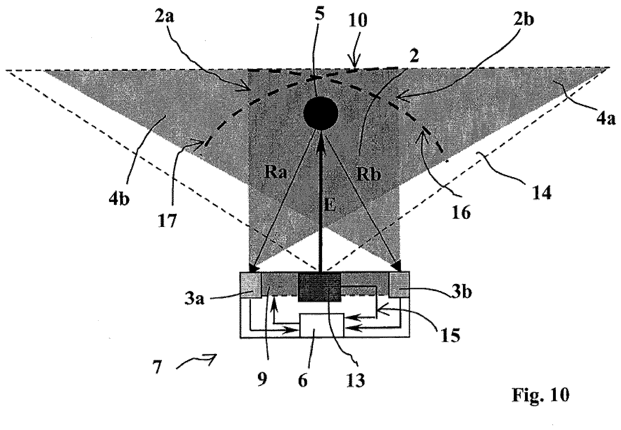

La figure 10 schématise un mode de réalisation d'un dispositif selon l'invention. Ce mode diffère des précédents en ce que les deux détecteurs 3a et 3b sont des détecteurs passifs présentant chacun un champ d'observation 4a, 4b.

Comme dans les modes de réalisation précédents les champs 4a et 4b sont discriminants spatialement et ils délimitent donc spatialement un des bords 2a ou 2b de la zone 2 observée.

Une source d'illumination 13, distincte des détecteurs, est solidaire du module de défense 7 et elle est reliée au module de calcul 6 par une liaison 15. Cette source émet un faisceau d'illumination laser 14 qui couvre la zone surveillée 2. La source 13 est ainsi indirectement reliée aux détecteurs 3a,3b par l'intermédiaire de l'unité de calcul 6 et par la liaison de synchronisation 15.

Grâce à la liaison 15, l'unité de calcul 6 assure la synchronisation entre le signal E émis par la source 13 et les signaux Ra et Rb reçus par les détecteurs 3a et 3b après réflexion sur la cible 5. L'intervalle de temps séparant l'émission du signal E de la réception des signaux réfléchis Ra et Rb est donc maîtrisé précisément et il est alors possible à l'unité de calcul de déterminer les distances de parcours du rayonnement entre la source 13 et chaque détecteur 3a,3b via la cible 5. On notera $\Delta a$ et $\Delta b$ ces distances et on écrira : $\Delta a = Da + D$ et $\Delta b = Db + D$, expressions dans lesquelles D représente la distance de la source 13 à la cible 5.

La source étant distincte des détecteurs, il n'est pas possible comme dans les modes de réalisation précédents de déterminer directement Da et Db mais cette indétermination n'a aucune importance pratique puisque pour assurer que la cible 5 se trouve bien dans la zone 2 il suffit de vérifier que les distances $\Delta a$ et $\Delta b$ sont inférieures à une limite $\Delta max$. Le lieu des points correspondants à la condition $\Delta a = \Delta max$ est un arc d'ellipse représenté par les pointillés 16. De même le lieu des points correspondants à la condition $\Delta b = \Delta max$ est l'arc d'ellipse 17.

Afin d'éliminer les fausses alarmes, on définira une fenêtre temporelle Ft entre l'émission par la source 13 d'un signal d'illumination et la réception par les détecteurs 3a et 3b d'un signal réfléchi par la cible 5.

Le procédé mis en oeuvre sera alors soit analogue à celui schématisé par le logigramme de la figure 7, soit analogue à celui schématisé par le logigramme de la figure 9 en remplaçant dans chaque étape Da, Db et $H_M$ respectivement par $\Delta a$, $\Delta b$ et $\Delta max$.

Conformément au logigramme de la figure 7 on pourra ainsi mesurer les deux distances $\Delta a$ et $\Delta b$ et vérifier qu'elles sont toutes les deux inférieures ou égale à $\Delta max$ dans la fenêtre temporelle requise.

Conformément au logigramme de la figure 9 on pourra alternativement ne mesurer qu'une seule distance $\Delta a$ ou Ab, vérifier qu'elle est inférieure ou égale à $\Delta max$, puis vérifier que l'autre détecteur a reçu un signal réfléchi par la cible dans la fenêtre temporelle requise (critère de présence de cible).

La source 13 est de préférence liée au module de défense 7 pour simplifier son raccordement au module de calcul 6 qui permet la synchronisation des signaux. Il serait bien entendu possible de disposer la source 13 à distance du module 7 à la condition de prévoir des moyens permettant d'assurer la synchronisation par l'unité de calcul 6 du signal émis par la source 13 avec les signaux réfléchis reçus par les détecteurs 3a, 3b.

Cette liaison de synchronisation pourrait être une liaison filaire ou bien une liaison radio ou optique.

Une seule source pourrait alors être associée à plusieurs modules de défense 7.

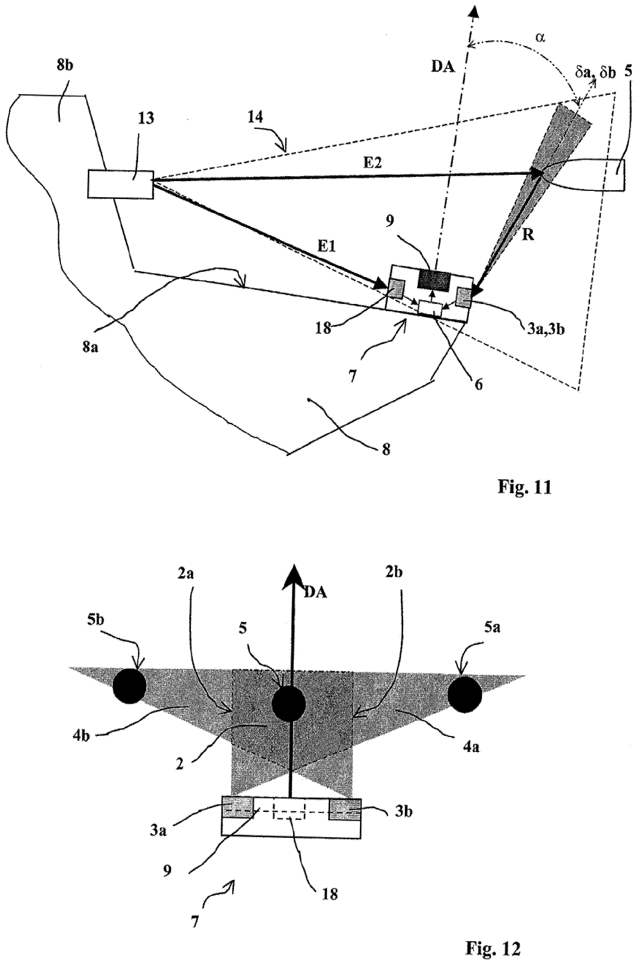

La figure 11 est analogue à la figure 3 mais montre un autre mode de réalisation d'un dispositif de protection dans lequel la source 13 est solidaire de la tourelle 8b d'un véhicule blindé 8, donc disposée à distance du module 7.

Dans ce cas, le module de défense active 7 comporte, en plus des deux détecteurs avant 3a et 3b, un détecteur arrière 18. Tous les détecteurs sont reliés au moyen de calcul 6 qui commande la projection du moyen d'interception 9 à l'issue d'un retard après détection cela afin de permettre à la cible 5 de se positionner au-dessus du module 7.

La source d'illumination 13 éclaire à la fois le module de défense 7 et la cible 5.

Le détecteur arrière 18 assure la synchronisation de la source 13 avec les détecteurs 3a et 3b.

En effet, le détecteur arrière 18 reçoit directement le rayonnement E1 émis par la source 13 alors que les détecteurs avant 3a,3b reçoivent le rayonnement R réfléchi sur la cible 5 après émission E2 par la source 13.

Le moyen de calcul 6 est alimenté par les signaux fournis par les détecteurs avant 3a,3b et arrière 18. Ce moyen est conçu ou programmé de façon à fournir un signal de détection de cible 5 lorsque le faisceau réfléchi R est reçu après la réception du faisceau émis E1 et au bout d'un intervalle de temps $\Delta t$ inférieur ou égal à une valeur de référence mise en mémoire dans le moyen de calcul 6.

En fonction de la géométrie du dispositif de protection, l'Homme du Métier déterminera aisément l'intervalle de temps maximal (Tret) devant séparer les arrivées des signaux laser au niveau des détecteurs arrière 18 et avant 3a,3b pour que la distance séparant le module de défense 7 et la cible 5 soit telle que cette dernière se situe dans la zone 2. Dans ce cas les mesures des distances de parcours entre source et détecteurs via la cible se déduisent de simples mesures d'intervalles de temps séparant l'arrivée du signal émis par la source sur le détecterur arrière 18 et l'arrivée du signal réfléchi sur la cible sur les détecteurs avant 3a,3b.

Les fusées de proximité mettant en oeuvre des capteurs avant et arrière solidaires d'un projectile et illuminés par une même source (fusées qui permettent de déduire une distance de la mesure des intervalles de temps entre les réceptions des signaux) sont bien connues de l'Homme du Métier. On pourra se reporter aux brevets US3698811 et FR2739681 qui décrivent de telles fusées.

Lorsque la cible 5 se trouve dans la zone 2 du module de défense active 7, le moyen de calcul 6 commande (à l'issue du retard nécessaire à la cible pour se placer au-dessus du module) la projection du moyen d'interception 9 suivant la direction DA, ce qui provoque la destruction ou la déstabilisation de la cible 5.

L'avantage de ce dispositif de protection selon l'invention est que chaque module de défense 7 est totalement autonome pour ce qui concerne la détermination de l'instant de déclenchement et que par ailleurs la détection de la cible 5 est assurée de façon simple grâce à une source laser 13 distincte du module de défense 7.

Un autre avantage est qu'il est possible en cas de besoin de rendre les modules de défense inactifs. Il suffit de stopper l'émission laser fournie par la source 13.

Afin d'assurer d'une façon efficace la détection de la cible 5, les détecteurs avant 3a,3b auront là encore une direction d'observation $\delta$ qui formera un angle $\alpha$ avec la direction d'attaque DA, angle qui sera inférieur à 90°.

Là encore, un ajustement de l'angle $\alpha$ permettra en partie de s'adapter à différentes gammes de vitesses de cibles. Plus la cible visée sera rapide, plus l'angle $\alpha$ devra être important pour assurer une détection plus précoce de la cible et donner un délai suffisant pour la projection du moyen d'interception.

La figure 12 montre en vue frontale ce mode de réalisation d'un module de défense 7 projetant un barreau 9. Le module de défense 7 comporte deux détecteurs avant 3a et 3b qui sont disposés sensiblement à chaque extrémité du barreau à projeter 9. Une telle disposition permet de matérialiser une zone d'interception 2 qui est l'intersection des zones de détection 4a et 4b de chaque détecteur avant 3a, 3b.

Par ailleurs (comme dans le mode selon la figure 10) chaque zone de détection 4a et 4b de chaque détecteur avant 3a, 3b a une forme telle qu'elle présente une limite (2a et 2b) sensiblement confondue avec un plan parallèle à la direction d'action DA selon laquelle le barreau 9 est projeté et passant par une extrémité du barreau 9.

La zone d'interception 2 se trouve donc compatible de la zone d'action du barreau 9. C'est à dire que, lorsqu'une cible est détectée dans cette zone d'interception, il est possible de la détruire avec le barreau 9 en projetant ce dernier à l'issue d'un délai approprié.

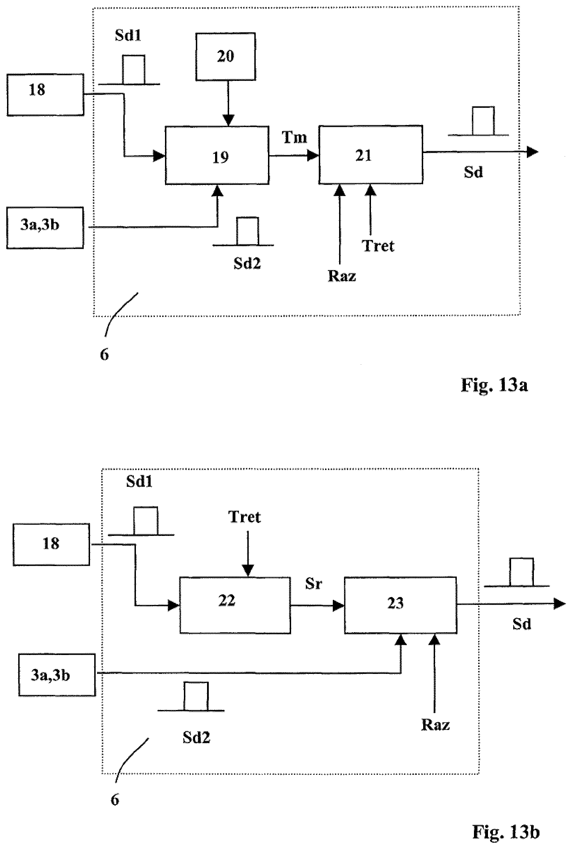

A titre indicatif, la figure 13a est un schéma bloc représentant (pour une voie de mesure 3a ou 3b) un mode de réalisation d'un moyen de calcul 6 mettant en oeuvre un procédé classique de télémétrie utilisant une source unique et des détecteurs avant (3a,3b) et arrière 18.

Le moyen de calcul 6 comprend un compteur 19, cadencé par une horloge 20, et dont le comptage est initié par une impulsion Sd1 fournie par le détecteur arrière 18 comme suite à la détection du signal émis par la source 13.

Le comptage est arrêté par une impulsion Sd2 fournie par un détecteur avant 3a ou 3b comme suite à la détection du signal réfléchi par la cible 5.

Un comparateur 21 est relié à une mémoire renfermant la valeur de référence Tret et il compare l'intervalle mesuré par le compteur Tm avec cette valeur de référence Tret. Il fournit un signal de détection Sd si Tm est inférieur ou égal à Tret. Ce signal correspond à la détection de l'approche de la cible à une distance donnée qui se déduit de cette mesure d'intervalle de temps Tm.

Bien entendu le comparateur 21 est remis à zéro (entrée Raz) périodiquement avec une fréquence égale à la fréquence de répétition de la source laser. Ainsi le moyen de calcul assure effectivement les comparaisons des écarts mesurés Tm pour chaque période du signal fourni par la source 13.

Pour protéger le dispositif contre des contre mesures éventuelles, on pourra avantageusement prévoir un codage du faisceau laser et disposer dans le moyen de calcul un circuit de décodage. Ce circuit (non représenté) sera interposé entre chaque détecteurs 18 et 3a ou 3b et le compteur 19.

La figure 13b est un schéma bloc représentant un autre mode de réalisation d'un moyen de calcul 6. Selon ce mode de réalisation l'impulsion Sd1, fournie par le détecteur arrière 18 comme suite à la détection du signal émis par la source 13, est appliquée à un circuit retard 22 (électronique ou optique). Ce circuit fournit à un comparateur 23 un signal Sr retardé du temps Tret

$$Sr(t) = Sd1(t-Tret).$$

Le comparateur 23 reçoit par ailleurs l'impulsion Sd2 fournie par un détecteur avant 3a ou 3b comme suite à la détection du signal réfléchi par la cible 5.

Il fournit alors un signal de détection Sd si le signal Sd2 lui parvient avant le signal Sr. Ce qui signifie que l'intervalle de temps séparant Sd1 et Sd2 est inférieur ou égal à Tret.

Le comparateur 23 est là encore remis à zéro (entrée Raz) périodiquement avec une fréquence égale à la fréquence de répétition de la source laser.

Ces schémas représentés sous la forme de diagrammes blocs ne préjugent bien entendu pas de la solution technique mise en oeuvre pour les réaliser. On pourra ainsi réaliser l'ensemble du moyen de calcul 6 sous la forme d'un microprocesseur programmé d'une façon appropriée.

Conformément au mode de réalisation de l'invention des figures 11 et 12, on pourra ne fournir un signal de détection de cible que lorsque le faisceau réfléchi R est reçu par les deux détecteurs avant 3a et 3b, dans une fenêtre temporelle donnée, après la réception (par le détecteur arrière 18) du faisceau E1 émis par la source 13 et au bout d'un intervalle de temps inférieur ou égal à une valeur de référence Tref (donc lorsque les distances de parcours sont inférieures à une valeur de référence).

Il est dans ce cas nécessaire pour déclencher le moyen d'interception 9 d'avoir un signal de détection fourni quasi simultanément à partir de chacune des voies de détection 3a et 3b. Une telle condition signifie que la cible se trouve dans la zone d'interception 2 et que le moyen d'interception pourra donc la détruire.

Les signaux reçus sur 3a et 3b arriveront avec un léger décalage, les distances de passage entre la cible et chaque détecteur 3a, 3b pouvant être différentes.

La différence maximale des distances de passage permet de définir la fenêtre temporelle entre les fournitures d'un signal de détection par chaque détecteur. Cette fenêtre est de l'ordre de la nano seconde. On considérera donc que la cible se trouve effectivement dans la zone d'interception si les deux signaux de détection apparaissent successivement dans cette fenêtre temporelle.

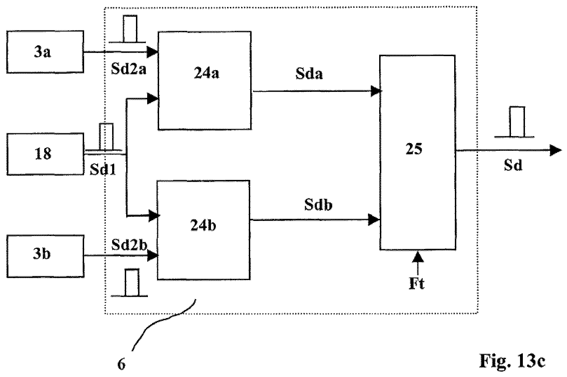

La figure 13c est un schéma bloc représentant le moyen de calcul mis en oeuvre par le dispositif de détection selon cette variante.

Le moyen de calcul 6 comporte alors deux voies de mesures 24a et 24b permettant d'évaluer les signaux de déclenchement Sda et Sdb obtenus respectivement à partir du détecteur 3a et du détecteur 3b.

Ces voies de mesure seront réalisées selon l'une ou l'autre des solutions décrites précédemment en référence aux figures 13a et 13b.

On traitera par une porte logique ET temporisée 25 les signaux Sda et Sdb fournis par chaque voie de mesure 24a et 24b. Cette porte logique est pilotée par l'horloge du circuit et elle ne fournit un signal de détection Sd que si elle reçoit les signaux Sda et Sdb dans l'intervalle de temps Ft (fenêtre temporelle) qui est mémorisé dans le calculateur.

Avec une telle variante de réalisation de l'invention seul le projectile 5 représenté à la figure 12 provoquera le tir du moyen d'interception 9. Les projectiles 5a et 5b qui ne coupent chacun que la zone de détection (4a ou 4b) d'un seul détecteur 3a ou 3b ne déclencheront pas le tir du moyen d'interception. Ces projectiles ne passent pas au-dessus du barreau 9 et ne pourraient pas être détruits.

Grâce à ce mode de réalisation de l'invention il est ainsi possible d'équiper un véhicule avec un dispositif de protection associant une source laser et plusieurs modules de défense active.

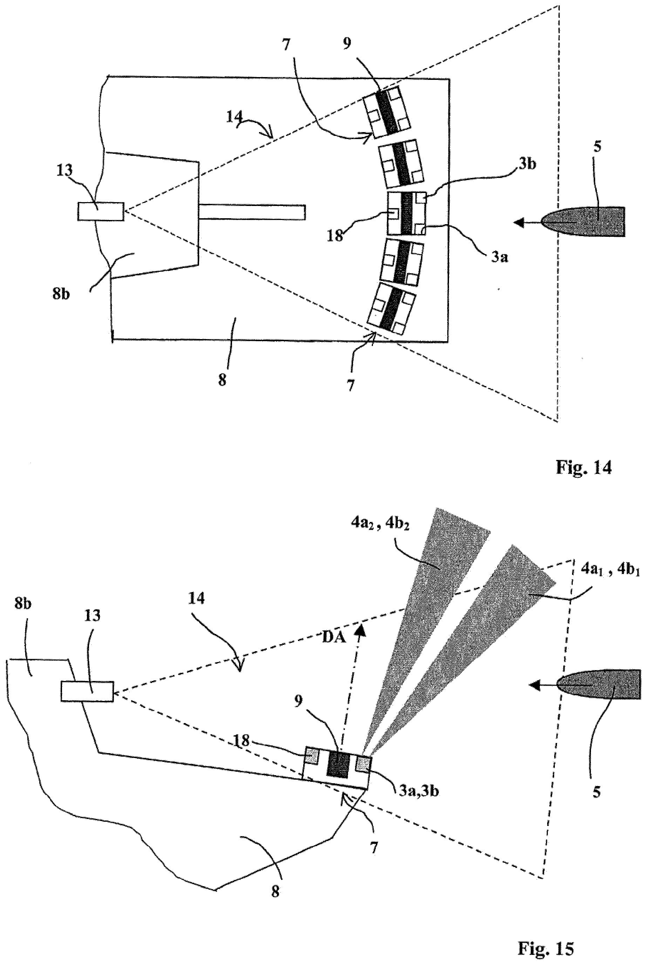

La figure 14 montre ainsi en vue de dessus un véhicule 8 portant sur son glacis avant cinq modules de défense 7. Une source laser 13 est portée par la tourelle 8b et elle a un faisceau d'émission 14 dont l'ouverture permet de contrôler simultanément tous les modules de défense 7 tout en interceptant la cible 5.

Chaque module de défense 7 comporte au moins un barreau projetable 9 et ses propres détecteurs laser avant 3a,3b et arrière 18.

Il n'est pas nécessaire ainsi (comme dans le brevet DE4008395) de prévoir des moyens complexes permettant de localiser la cible 1 par rapport au véhicule afin de pouvoir déterminer quel module de défense il faut activer et à quel instant.

Seul le module 7 concerné et pouvant effectivement contrer la cible 5 sera activé (d'une façon totalement automatique) par les moyens de commande intégrés au module 7 lui-même, à partir des signaux fournis par la source laser 13 et réfléchis sur la cible 5.

Afin d'améliorer le système de protection selon l'invention on pourra, comme représenté sur la figure 15, mettre en oeuvre des détecteurs avant 3a,3b pouvant (grâce à une optique appropriée) observer chacun suivant deux zones de détection distinctes 4a1, 4a2 pour le détecteur 3a et 4b1, 4b2 pour le détecteur 3b. On pourrait éventuellement remplacer chaque détecteur 3a ou 3b par deux détecteurs ayant chacun une zone de détection distincte.

Le moyen de calcul comparera alors les informations de distance et temporelles fournies à partir des détections effectuées suivant chaque zone de détection et il interdira le déclenchement du module si ces informations sont incohérentes avec la gamme de vitesse des cibles considérées. Le module de défense ne se déclenchera donc que pour contrer les cibles qu'il peut détruire, donc celles dont la vitesse se trouve dans une gamme donnée.

Il est bien entendu possible de mettre en oeuvre des détecteurs de technologie radar pour tous les modes de réalisation précédemment décrits.

**Revendications**

**1.** Dispositif de détection de l'entrée d'une cible (5) dans une zone (2) comprenant au moins une source (13) pouvant émettre un faisceau d'illumination (14) en direction de la cible (5) et au moins deux détecteurs (3a,3b) disposés à proximité de ladite zone (2) et dont les champs de détection (4a, 4b) comportent une partie commune, chaque détecteur étant synchronisé à ladite source (13) et étant disposé de façon à pouvoir recevoir un rayonnement réfléchi (R) sur la cible (5) après son émission par ladite source (13), un moyen de calcul (6) étant alimenté par des signaux fournis par les détecteurs (3a, 3b) et calculant, soit des première et deuxième distances de parcours (2Da, 2Db, Δa, Δb) entre la source (13) et chacun des détecteurs (3a, 3b) via la cible (5), soit une seule de ces première et deuxième distances de parcours (2Da, 2Db, Δa, Δb) entre la source (13) et un des détecteurs (3a, 3b) via la cible (5) que l'on associe alors à un critère de présence de cible fourni par l'autre des détecteurs, le moyen de calcul (6) fournissant un signal de détection de cible lorsque la ou les distances de parcours calculées, ainsi qu'éventuellement ledit critère de présence fourni, permettent de définir un point se situant géométriquement dans la zone surveillée (2), dispositif *caractérisé en ce que* les deux détecteurs sont des détecteurs passifs (3a, 3b) et au moins un des deux détecteurs (3a, 3b) passifs est discriminant c'est à dire comporte son champ de détection permettant de discriminer spatialement au moins un bord (2a,2b) de ladite zone (2), et **en ce que** ladite source (13) étant distincte de ces détecteurs, ladite source étant reliée au moyen de calcul (6) par au moins une liaison de synchronisation (15 ; E1, Sd1).

**2.** Dispositif de détection selon la revendication 1, **ca-**

**ractérisé en ce que** la source (13) est disposée à distance des deux détecteurs passifs, le dispositif de détection comportant un troisième détecteur arrière (18) recevant directement le faisceau d'illumination (E1) émis par la source et relié au moyen de calcul (6), le détecteur arrière (18) assurant la synchronisation de la source (13) avec lesdits deux détecteurs passifs (3a, 3b).

**3.** Dispositif de détection selon une des revendications 1 ou 2, **caractérisé en ce que** ladite source (13) émet un faisceau radar ou laser pulsé.

**4.** Dispositif de protection **caractérisé en ce qu'**il associe au moins un dispositif de détection selon une des revendications 1 ou 3 et au moins un module de contrôle ou de défense (7) dont le déclenchement est commandé par le signal de détection de cible après que la cible (5) a pénétré dans une zone d'efficacité du module de contrôle ou de défense (7).

**5.** Dispositif de protection selon la revendication 4, **caractérisé en ce que** ledit module de contrôle ou de défense (7) comprend un moyen de protection active susceptible de projeter au devant de la cible (5) au moins un moyen d'interception (9).

**6.** Dispositif de protection selon la revendication 5, **caractérisé en ce que** le moyen d'interception (9) comprend au moins une plaque de blindage et/ou au moins un jet ou noyau de charge formée et/ou au moins un barreau et/ou au moins un projectile explosif et/ou au moins un projectile à effet de souffle.

**7.** Dispositif de protection selon la revendication 5, **caractérisé en ce que** le moyen d'interception (9) comprend au moins un barreau projetable par explosif.

**8.** Dispositif de protection selon la revendication 7, **caractérisé en ce que** chacun desdits deux détecteurs passifs (3a,3b) est disposé au niveau d'une des extrémités du barreau (9).

**9.** Dispositif de protection selon une des revendications 4 à 8, **caractérisé en ce que** chacun desdits deux détecteurs passifs comporte son champ de détection (4a,4b) permettant de discriminer spatialement le bord (2a,2b) de ladite zone (2).

**10.** Dispositif de protection selon une des revendications 4 à 9, **caractérisé en ce que** ladite source (13) est disposée à distance des deux détecteurs passifs, le dispositif de détection comportant un troisième détecteur arrière (18) recevant directement le faisceau d'illumination (E1) émis par la source et relié au moyen de calcul (6).

**11.** Dispositif de protection selon la revendication 10, **caractérisé en ce qu'**il associe au moins deux module de contrôle ou de défense (7) à la source (13), chaque module de contrôle ou de défense (7) comportant ses propres détecteurs passifs (3a,3b) et son troisième détecteur arrière (18) recevant directement le faisceau d'illumination (E1) émis par la source (13) relié à son moyen de calcul (6).

12. Dispositif de protection selon l'une des revendications 4 à 11, **caractérisé en ce que** chaque module de contrôle et de défense (7) est solidaire de ses deux détecteurs passifs (3a, 3b).

**Patentansprüche**

1. Vorrichtung zur Erfassung des Eintritts eines Ziels (5) in eine Zone (2), aufweisend mindestens eine Quelle (13), welche ein Beleuchtungsbündel (14) in Richtung auf das Ziel (5) aussenden kann, und mindestens zwei Detektoren (3a, 3b), welche in der Nähe der genannten Zone (2) angeordnet sind und deren Erfassungsfelder (4a, 4b) einen gemeinsamen Abschnitt umfassen, wobei jeder Detektor mit der genannten Quelle (13) synchronisiert und angeordnet ist, um eine nach der Aussendung durch die genannte Quelle (13) an dem Ziel (5) reflektierte Strahlung (R) empfangen zu können, ein Rechenmittel (6), welches mit den von den Detektoren (3a, 3b) bereitgestellten Signalen versorgt wird und entweder erste und zweite Laufdistanzen (2Da, 2Db, $\Delta$a, $\Delta$b) zwischen der Quelle (13) und dem jeweiligen Detektor (3a, 3b) über das Ziel oder eine einzelne von diesen ersten und zweiten Laufdistanzen (2Da, 2Db, $\Delta$a, $\Delta$b) zwischen der Quelle (13) und einem der Detektoren (3a, 3b) über das Ziel (5) berechnet, welche dann mit einem Präsenzkriterium des Ziels verknüpft wird, welches von dem anderen Detektor bereitgestellt wird, wobei das Rechenmittel (6) ein Zielerfassungssignal bereitstellt, wenn die berechnete oder berechneten Laufdistanzen sowie eventuell das genannte bereitgestellte Präsenzkriterium es ermöglichen, einen Punkt zu definieren, welcher sich geometrisch in der überwachten Zone (2) befindet, **dadurch gekennzeichnet, dass** die beiden Detektoren (3a, 3b) passiv sind und mindestens einer der beiden passiven Detektoren (3a, 3b) unterscheidend ist, das heißt sein Erfassungsfeld umfasst, welches es ermöglicht, wenigstens einen Rand (2a, 2b) der genannten Zone (2) räumlich zu unterscheiden, und dass die genannte Quelle (13) von diesen Detektoren verschieden ist, wobei die genannte Quelle durch mindestens eine Synchronisierungsverbindung (15 ; E1, Sd1) mit dem Rechenmittel (6) verbunden ist.

2. Erfassungsvorrichtung nach Anspruch 1, **dadurch gekennzeichnet, dass** die Quelle (13) beabstandet von den beiden passiven Detektoren angeordnet ist, wobei die Erfassungsvorrichtung einen dritten hinteren Detektor (18) umfasst, welcher das von der Quelle ausgesandte Beleuchtungsbündel (E1) direkt empfängt und mit dem Rechenmittel (6) verbunden ist, wobei der hintere Detektor (18) die Synchronisierung der Quelle (13) mit den genannten beiden passiven Detektoren (3a, 3b) gewährleistet.

3. Erfassungsvorrichtung nach einem der Ansprüche 1 oder 2, **dadurch gekennzeichnet, dass** die genannte Quelle (13) einen Radar- oder gepulsten Laserstrahl aussendet.

4. Schutzvorrichtung, **dadurch gekennzeichnet, dass** sie mindestens eine Erfassungsvorrichtung nach einem der Ansprüche 1 oder 3 und mindestens ein Steuer- oder Verteidigungsmodul (7) vereinigt, dessen Auslösung durch das Zielerfassungssignal gesteuert wird, nachdem das Ziel (5) in eine Effizienzzone des Steuer- oder Verteidigungsmoduls (7) eingedrungen ist.

5. Schutzvorrichtung nach Anspruch 4, **dadurch gekennzeichnet, dass** das genannte Steuer- oder Verteidigungsmodul (7) ein Mittel zum aktiven Schutz aufweist, welches geeignet ist, mindestens ein Abfangmittel (9) vor das Ziel (5) zu schleudern.

6. Schutzvorrichtung nach Anspruch 5, **dadurch gekennzeichnet, dass** das Abfangmittel (9) mindestens eine Panzerplatte und/oder mindestens einen Strahl oder Kern von geformter Ladung und/oder mindestens eine Stange und/oder mindestens ein Explosivprojektil und/oder mindestens ein Projektil mit Luftdruckwirkung umfasst.

7. Schutzvorrichtung nach Anspruch 5, **dadurch gekennzeichnet, dass** das Abfangmittel (9) mindestens einen durch Explosivstoff schleuderbaren Stab umfasst.

8. Schutzvorrichtung nach Anspruch 7, **dadurch gekennzeichnet, dass** jeder der genannten beiden passiven Detektoren (3a, 3b) auf Höhe eines der Enden des Stabs (9) angeordnet ist.

9. Schutzvorrichtung nach einem der Ansprüche 4 bis 8, **dadurch gekennzeichnet, dass** jeder der genannten beiden passiven Detektoren sein Erfassungsfeld (4a, 4b) umfasst, welches es ermöglicht, den Rand (2a, 2b) der genannten Zone (2) räumlich zu unterscheiden.

10. Schutzvorrichtung nach einem der Ansprüche 4 bis 9, **dadurch gekennzeichnet, dass** die genannte Quelle (13) beabstandet von den beiden passiven Detektoren angeordnet ist, wobei die Erfassungsvorrichtung einen dritten hinteren Detektor (18) umfasst, welcher das von der Quelle ausgesandte Beleuchtungsbündel (E1) direkt empfängt und mit dem Rechenmittel (6) verbunden ist.

11. Schutzvorrichtung nach Anspruch 10, **dadurch gekennzeichnet, dass** sie mindestens zwei Steuer- oder Verteidigungsmodule (7) mit der Quelle (13) verknüpft, wobei jedes Steuer- oder Verteidigungsmodul (7) seine eigenen passiven Detektoren (3a, 3b) und seinen dritten hinteren Detektor (18) umfasst, welcher das von der Quelle (13) ausgesandte Beleuchtungsbündel (E1) direkt empfängt und mit seinem Rechenmittel (6) verbunden ist.

12. Schutzvorrichtung nach einem der Ansprüche 4 bis 11, **dadurch gekennzeichnet, dass** jedes Steuer- und Verteidigungsmodul (7) fest mit seinen beiden passiven Detektoren (3a, 3b) verbunden ist.

**Claims**

1. Device to detect the entry of a target (5) into a zone (2) comprising at least one source (13) able to emit an illuminating beam (14) in the direction of the target (5) and at least two sensors (3a, 3b) arranged in proximity to said zone (2) and whose sensor fields (4a, 4b) incorporate a common part, each sensor being synchronised with said source (13) and being arranged so as to be able to receive radiation (R) reflected on the target (5) after its emission by said source (13), calculation means (6) being supplied by signals from the sensors (3a, 3b) and calculating either the first and second travel distances (2Da, 2Db, ∆a, ∆b) lying between the source (13) and each of the sensors (3a, 3b) via the target (5), or only one of these first and second travel distances (2Da, 2Db, ∆a, ∆b) between the source (13) and one of the sensors (3a, 3b) via the target (5) which is then associated with the target presence criterion supplied by the other sensor, the calculation means (6) supplying a target detection signal with the calculated travel distance or distances, as well as any said presence criterion supplied, enable a point to be defined that is located geometrically within the zone under surveillance (2), device *characterised in that* the two sensors are passive sensors (3a, 3b) and at least one of the two passive sensors (3a, 3b) is a discriminating sensor, which is to say it incorporates its sensor field enabling the spatial discrimination of at least one edge (2a, 2b) of said zone (2) and **in that** said source (13) is separate from its sensors, said source being linked to the calculation means (6) by at least one synchronisation link (15; E1, Sd1).

2. Detection device according to Claim 1, **characterised in that** the source (13) is arranged at a distance from two passive sensors, the detection device incorporating a third rear sensor (18) that directly receives the illuminating beam (E1) emitted by the source and linked to the calculation means (6), the rear sensor (18) ensuring the synchronisation of the source (13) with said passive sensors (3a, 3b).

3. Detection device according to one of Claims 1 or 2, **characterised in that** the said source (13) emits a pulsed radar or laser beam.

4. Protection device **characterised in that** it associates at least one detection device according to one of Claims 1 or 3 and at least one command or defence module (7) triggered by the target detection signal after the target (5) has penetrated into an efficiency zone of the command or defence module (7).

5. Protection device according to Claim 4, **characterised in that** said command or defence module (7) comprises active protection means able to project at least one interception means in front of the target (5).

6. Protection device according to Claim 5, **characterised in that** the interception means (9) comprise at least one armour plate and/or at least one jet of a shaped charge or an explosively-formed charge and/or at least one penetrator and/or at least one explosive projectile and/or at least one blast-effect projectile.

7. Protection device according to Claim 5, **characterised in that** the interception means (9) comprise at least one explosively projectable bar.

8. Protection device according to Claim 7, **characterised in that** each of the said two passive sensors (3a, 3b) is arranged at one of the ends of the bar (9).

9. Protection device according to one of Claims 4 to 8, **characterised in that** each of said two passive sensors incorporates its sensor field (2a, 2b) enabling the edge (2a, 2b) of said zone (2) to be spatially discriminated.

10. Protection device according to one of Claims 4 to 9, **characterised in that** said source (13) is arranged at a distance from the two passive sensors, the detection device incorporating a third rear sensor (18) directly receiving the illuminating beam (E1) emitted by the source and linked to the calculation means (6).

11. Protection means according to Claim 10, **characterised in that** it associates at least two command or defence modules (7) with the source (13), each command or defence module (7) incorporating its own passive sensors (3A, 3b) and its third rear sensor (18) directly receiving the illuminating beam (E1) emitted by the source (13) linked to its calculation means (6).

12. Protection device according to one of Claims 4 to 11, **characterised in that** each command or defence module (7) is integral with its two passive sensors (3a, 3b).

Fig. 1

Fig. 3

Fig. 2

Fig. 4a

Fig. 4b

Fig. 5

Fig. 6

Fig. 8

**Fig. 7**

A → Da, Db

E → Da ≤ $H_M$ — N

O

F → Db ≤ $H_M$ — N

O

B → Ft ? — N

O

D → Detect

**Aa** → Da

**E** → Da ≤ $H_M$ — N

O

**G** → Rb ? — N

O

**B** → Ft ? — N

O

**D** → Detect

Fig. 9

Fig. 10

**Fig. 11**

**Fig. 12**

Fig. 13a

Fig. 13b

Fig. 13c

Fig. 14

Fig. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2722873
- WO 0188564 A
- EP 0687885 A
- DE 4008395
- DE 2719150
- FR 2679022
- FR 2786262
- GB 1421379 A
- US 3893368 A
- FR 2805037
- US 3698811 A
- FR 2739681